# EUROPÄISCHE PATENTSCHRIFT

(11) **EP 1 594 718 B1**
(45) Veröffentlichungstag und Bekanntmachung des Hinweises auf die Patenterteilung: **28.10.2009**
(21) Anmeldenummer: 04708722.6
(22) Anmeldetag: 06.02.2004
(51) Int. Cl.: B60N 2/427, B60N 2/16, B60N 2/42

(54) **HÖHENEINSTELLBARER FAHRZEUGSITZ MIT CRASHSPERRENEINHEIT**
HEIGHT-ADJUSTABLE VEHICLE SEAT COMPRISING A LOCKING UNIT USED IN THE EVENT OF A COLLISION
SIEGE DE VEHICULE REGLABLE EN HAUTEUR POURVU D'UNE UNITE DE BLOCAGE EN CAS DE COLLISION

(30) Priorität: 19.02.2003 DE 10306828
(43) Veröffentlichungstag der Anmeldung: 16.11.2005
(73) Patentinhaber: KEIPER GmbH & Co. KG, 67657 Kaiserslautern (DE)
(72) Erfinder: SCHUMANN, Kai, 66509 Rieschweiler-Mühlbach (DE); TEUFEL, Ingo, 67806 Rockenhausen (DE); BRAUN, Dieter, 67697 Otterberg (DE); HAMMANN, Heinrich, 67806 Teschenmoschel (DE)
(74) Vertreter: Patentanwälte Hosenthien-Held und Dr. Held
(86) Internationale Anmeldenummer: PCT/EP2004/001083
(87) Internationale Veröffentlichungsnummer: WO 2004/074037

(56) Entgegenhaltungen:
- DE-A- 4 408 219
- DE-A- 19 544 169
- DE-A- 19 953 630
- DE-C- 10 018 828
- US-A- 5 556 159

## Beschreibung

Die Erfindung betrifft einen Fahrzeugsitz, insbesondere einen Kraftfahrzeugsitz, mit den Merkmalen des Oberbegriffs des Anspruches 1.

Ein Fahrzeugsitz dieser Art ist aus der DE 44 08 219 A1 bekannt. Bei einem in der DE 199 53 630 A1 beschriebenen Fahrzeugsitz ist zur Entlastung des Höheneinstellerantriebs eine Crashsperreneinheit zwischen dem Sitzrahmen und der hinteren Schwinge vorgesehen, welche durch eine Geometrieänderung des unter Vorspannung aufgehängten Viergelenks aktiviert wird. Für bestimmte Anwendungen wäre es aber wünschenswert, wenn das Viergelenk eine möglichst geringe Geometrieänderung erfahren würde.

Der Erfindung liegt daher die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Das Mehrgelenk ist im Normalfall als Viergelenk wirksam, wird dann im Crashfall zunächst ein Fünfgelenk, um eine Geometrieänderung durchzuführen und wird dann durch das Verriegeln der Crashsperreneinheit zum starren Dreigelenk, welches keine weitere Bewegung zulässt. Es wird eine bessere Krafteinleitung vom Sitzoberbau in die Fahrzeugstruktur ermöglicht und das Mehrgelenk insgesamt steifer, so dass letzteres nur eine sehr geringe Deformation und damit Geometrieänderung erfährt, also das Verriegeln mit einer sehr kleinen Bewegung des Mehrgelenks erfolgt. Damit wird beispielsweise ein am Sitzrahmen angebrachter Gurtanbindungspunkt nur geringfügig vorverlagert, was die Wirksamkeit des Sicherheitsgurtes und des Airbags deutlich erhöht.

Die Crashsperreneinheit verriegelt vorzugsweise zwangsgesteuert aufgrund einer Geometrieänderung des Mehrgelenks, welche beispielsweise während der Phase des Fünfgelenks auftritt. Damit ist die erfindungsgemäße Lösung auch für rein manuelle Sitzausführungen ohne Strom und ohne Crashsensorinformationen einsetzbar und zeigt eine schnelle Verriegelung. Die Geometrieänderung des Mehrgelenks erfolgt vorzugsweise reversibel, was gegenüber Systemen mit abscherenden Stiften oder dergleichen den Vorteil hat, dass nicht nach jeder Art von Crash der Fahrzeugsitz aufwendig instand gesetzt werden muss.

In einer einfach herzustellenden Ausführung weist die Crashsperreneinheit eine in zwei Richtungen wirksame Klinke, welche an einem der Getriebeglieder schwenkbar gelagert ist, beispielsweise an der Schwinge, und ein Gegenelement auf, welches fest an dem anderen Getriebeglied angebracht ist, also beispielsweise am Gestell. Eine derartige Crashsperreneinheit ist sowohl bei einem Frontcrash als auch bei einem Heckcrash wirksam. Das zwischen dem Gestell und der mit ihm im Crashfall verriegelnden Schwinge vorgesehene Getriebeglied ist vorzugsweise mit der Klinke gekoppelt, um auf einfache Weise die verriegelnde Bewegung der Klinke auszulösen. Entsprechend ist im Crashfall eine Bewegung dieses dazwischen vorgesehenen Getriebeglieds vorgesehen. Als Kopplung ist eine Schlitz-Zapfen-Führung bevorzugt, welche zugleich einen Längenausgleich ermöglicht und dadurch eine Vielzahl von Ausgangsgeometrien der Bauteile erlaubt.

In einer bevorzugten Ausführungsform sind zwei benachbarte Getriebeglieder des Mehrgelenks im Normalfall durch eine Verriegelungseinheit starr miteinander verbunden, d.h. das Mehrgelenk hat zunächst einen Freiheitsgrad weniger. Diese Verriegelungseinheit öffnet dann im Crashfall, vorzugsweise reversibel, so dass ein weiterer Freiheitsgrad zur Verfügung steht. Mit diesem Freiheitsgrad kann die Geometrieänderung bewirkt werden, welche zum zwangsgesteuerten Verriegeln der Crashsperreneinheit führt. Bei den durch die Verriegelungseinheit miteinander verbundenen Getriebegliedern handelt es sich vorzugsweise um die im Crashfall mit dem Gestell verriegelnde Schwinge und das dazwischen vorgesehene Getriebeglied, welches also im Normalfall eine Verlängerung der Schwinge bildet und im Crashfall beispielsweise relativ zu dieser Schwinge längsverschiebbar oder - als eine weitere Schwinge - verschwenkbar ist.

Die Verriegelungseinheit hält die beiden benachbarten Getriebeglieder vorzugsweise kraftschlüssig, so daß eine Grenzkraft definiert wird, die durch Gebrauchs- und Mißbrauchslasten nicht erreicht wird, bei deren Überschreiten im Crashfall jedoch die Verriegelungseinheit öffnet, wodurch die beiden Getriebeglieder relativ zueinander beweglich sind, d.h. die Geometrieänderung durchführen können. Eine solche Verriegelungseinheit kann beispielsweise einen schwenkbar gelagerten Riegel an einem Getriebeglied, ein Gegenstück am anderen, benachbarten Getriebeglied und eine Feder zwischen dem Riegel und dem ihm zugeordneten Getriebeglied aufweisen. Eine derartige Verriegelungseinheit zeigt eine hohe Schnelligkeit beim Auslösen, ein gutes Dauerlaufverhalten, eine hohe Haltbarkeit gegenüber Mißbrauch und eine einfache Justierbarkeit und Festlegung der Grenzkraft über die Feder. Die erfindungsgemäße Crashsperreneinheit ist daher für unterschiedliche Sitzgewichte und/oder Crashanforderungen einsetzbar.

Um lastfallunabhängig zu sein, d.h. sowohl bei einem Frontcrash als auch bei einem Heckcrash wirksam zu sein, weist der Riegel vorzugsweise zwei unterschiedliche Funktionsflächen auf, welche auch unter Last jeweils außerhalb des Selbsthemmungsbereichs am Gegenstück anliegen, um ein definiertes Öffnen der Verriegelungseinheit zu unterstützen. Die Parameter dieser Funktionsflächen dienen zur Anpassung an die unterschiedlichen Crasharten (Lastfälle) und Anforderungen, wobei die beiden Wirkrichtungen unterschiedlich eingestellt werden können. Insbesondere werden durch die Anlagewinkel die relevanten Kraftkomponenten definiert, was eine in die beiden Wirkrichtungen unterschiedliche Grenzkraft ermöglicht, wobei über die Feder das absolute Niveau einfach eingestellt werden kann. Auch die Crashsperreneinheit funktioniert lastfallunabhängig, bleibt jedoch bei Gebrauchs- und Mißbrauchslasten unverriegelt.

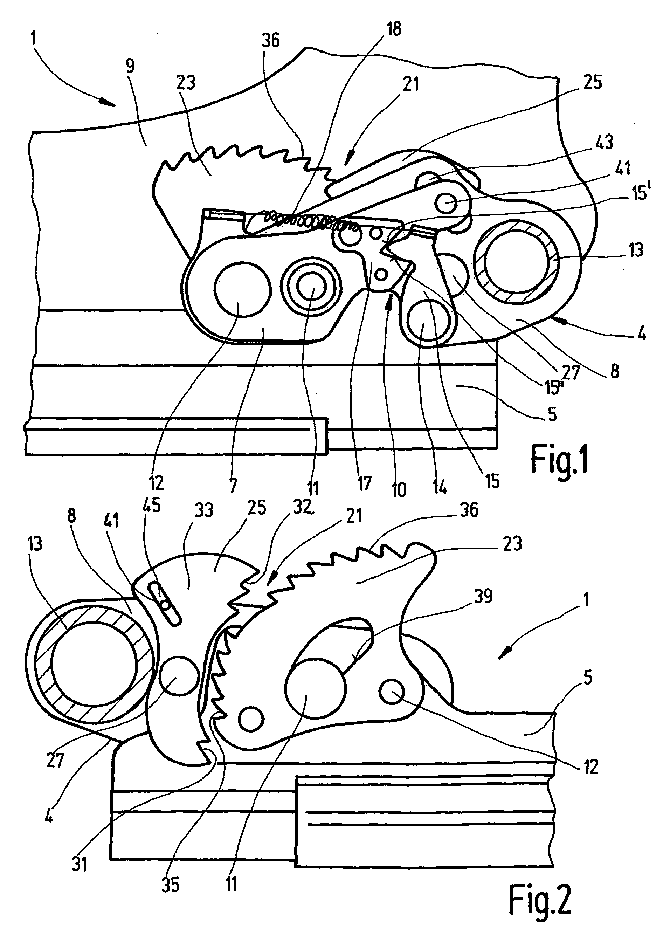

Im folgenden ist die Erfindung anhand eines in der Zeichnung dargestellten Ausführungsbeispiels näher erläutert. Es zeigen
- Fig. 1: eine teilweise geschnittene Ansicht des Bereichs der hinteren rechten Ecke des ersten Ausführungsbeispiels im Normalfall, welche die nach innen weisende Seite zeigt,
- Fig. 2: eine Fig. 1 entsprechende Ansicht, welche die nach außen weisende Seite ohne Sitzrahmen zeigt,

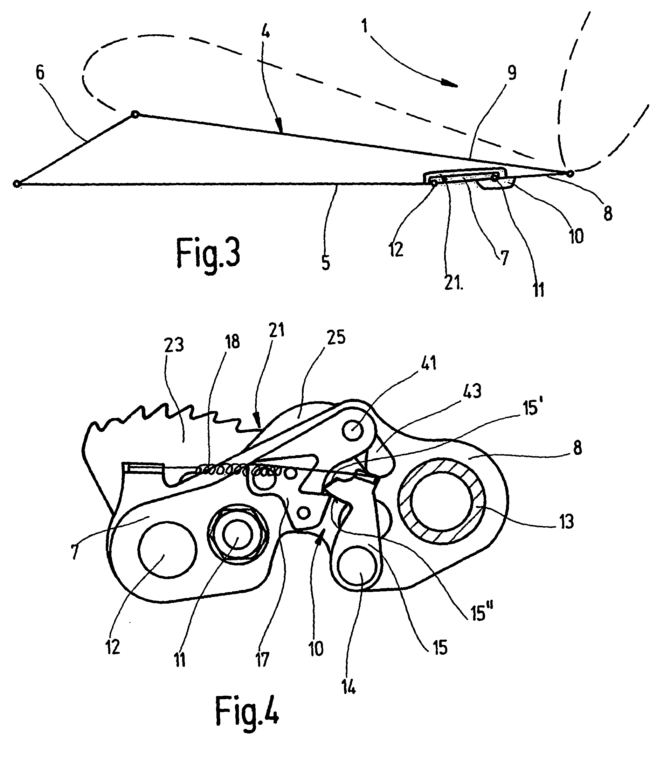

- Fig. 3: eine schematische Prinzipskizze eines Fahrzeugsitzes mit angedeuteter Polsterung, und
- Fig. 4: eine Fig. 1 entsprechende Ansicht der Schwingen samt Verriegelungseinheit und Crashsperreneinheit im Falle eines Frontcrashs.

Ein höheneinstellbarer Fahrzeugsitz 1 ist für ein Kraftfahrzeug vorgesehen. Als Höheneinsteller dienen auf beiden Fahrzeugsitzseiten Mehrgelenke, wobei im Ausführungsbeispiel auf der linken Seite ein motorisch bewegliches Viergelenk und auf der anderen, d.h. rechten Seite ein im Normalfall, d.h. außerhalb des Crashfalls, als Viergelenk wirksames Mehrgelenk 4 vorgesehen ist, welches dem motorisch angetriebenen Viergelenk entsprechende Abmessungen aufweist.

Das Mehrgelenk 4 besteht aus fünf Getriebegliedern, nämlich einem fahrzeugstrukturfest zu verbindenden Gestell 5, vorliegend einer Oberschiene eines als Längseinsteller dienenden Sitzschienenpaares, einer am Gestell 5 angelenkten vorderen Schwinge 6, einer hinten am Gestell 5 angelenkten Steuerschwinge 7, einer an der Steuerschwinge 7 angelenkten Trägerschwinge 8 und einer an der vorderen Schwinge 6 und der Trägerschwinge 8 angelenkten Koppel 9, vorliegend einem Sitzrahmenseitenteil. Dabei ist im Normalfall die Steuerschwinge 7 durch eine nachstehend beschriebene Verriegelungseinheit 10 starr mit der Trägerschwinge 8 verbunden. Das Mehrgelenk 4 ist also ein Fünfgelenk, welches aber durch das Verriegeln zwischen Steuerschwinge 7 und Trägerschwinge 8 im Normalfall als Viergelenk wirkt. Die Trägerschwinge 8 ist mittels eines Verbindungsbolzens 11 an der Steuerschwinge 7 angelenkt, die Anlenkung der Steuerschwinge 7 am Gestell 5 erfolgt mittels eines Gelenkbolzens 12, und als Anlenkstelle zwischen der Trägerschwinge 8 und der Koppel 9 dient ein rundes Querrohr 13, welches zugleich einen Teil des Sitzrahmens bildet. Die Trägerschwinge 8 umschließt mit einem nicht näher dargestellten Langloch den Gelenkbolzen 12 mit Spiel.

Die Verriegelungseinheit 10 für die im Normalfall vorhandene starre Verbindung zwischen der Steuerschwinge 7 und der Trägerschwinge 8 weist an der Trägerschwinge 8 in einem Bereich hinter dem Verbindungsbolzen 11 einen mittels eines Riegel-Lagerbolzens 14 angelenkten Riegel 15 auf, der in ein Gegenstück 17 greift, welches starr mit der Steuerschwinge 7 verbunden ist. Dabei weist der Riegel 15 eine obere Funktionsfläche 15', welche bei einem Heckcrash zur Wirkung kommt, und eine untere Funktionsfläche 15" auf, welche für den Frontcrash relevant wird. Eine als Zugfeder ausgebildete Feder 18 ist zwischen dem Riegel 15 und einer vor dem Verbindungsbolzen 11 vorgesehenen Abwinkelung der Trägerschwinge 8 eingehängt. Die Feder 18 spannt den in das Gegenstück 17 greifenden Riegel 15 vor, wobei die Winkel zwischen den Funktionsflächen 15' und 15" einerseits und den entsprechenden Anlageflächen des Gegenstücks 17 außerhalb des Selbsthemmungsbereichs liegen. Dabei wird durch die Vorspannung der Feder 18 eine Grenzkraft definiert, bis zu welcher die Verriegelungseinheit 10 kraftschlüssig hält, d.h. die Steuerschwinge 7 und die Trägerschwinge 8 miteinander starr verbunden sind.

Eine Crashsperreneinheit 21 des Fünfgelenks 4, welche im Crashfall verriegelt, weist ein am Gestell 5 angebrachtes Zahnsegment 23 und eine Klinke 25 auf, welche mittels eines Klinken-Lagerbolzens 27 schwenkbar an der Trägerschwinge 8 gelagert ist. Die zweiarmig ausgebildete, näherungsweise vertikal angeordnete Klinke 25 weist zwei Verzahnungsbereiche auf, und zwar einen unteren Verzahnungsbereich 31 und einen oberen Verzahnungsbereich 32, in dessen Nachbarschaft aufgrund einer materialmäßig vergrößerten Ausbildung der Klinke 25 auch der Schwerpunkt 33 liegt. Die Zähne der beiden Verzahnungsbereiche 31 und 32 sind bezüglich den beiden möglichen Schwenkrichtungen der Klinke 25 leicht radial nach außen gerichtet.

Das um den Gelenkbolzen 12 gekrümmte Zahnsegment 23, welches in geringem Abstand zur Klinke 25 angeordnet ist, ist als Gegenelement zur Klinke 25 vorgesehen. Das Zahnsegment 23 weist ebenfalls zwei Bereiche von Zähnen auf, nämlich einen unteren Zahnsegmentbereich 35, welcher zum Zusammenwirken mit dem unteren Verzahnungsbereich 31 der Klinke 25 ausgebildet ist, d.h. mit leicht nach oben gerichteten Zähnen versehen ist, und einen oberen Zahnsegmentbereich 36, welcher zum Zusammenwirken mit dem oberen Verzahnungsbereich 32 der Klinke 25 ausgebildet ist, d.h. mit leicht nach unten gerichteten Zähnen versehen ist.

Bei einer Schwenkbewegung der Steuerschwinge 7 und der mit ihr verriegelten Trägerschwinge 8 um den Gelenkbolzen 12, wie sie bei einer Höheneinstellung des Fahrzeugsitzes 1 auftritt, wandern die Verzahnungsbereiche 31 und 32 der Klinke 25 an den Zahnsegmentbereichen 35 und 36 entlang. Um in jeder Einstellung des Fünfgelenks 4 ein Zusammenwirken gewährleisten zu können, sind die Zahnsegmentbereiche 35 und 36 daher länger als die entsprechenden Verzahnungsbereiche 31 und 32 ausgebildet. Für eine Verbesserung der Führung ragt der Verbindungsbolzen 11 durch eine Kulisse 39 des Zahnsegments 23, welche um den Gelenkbolzen 12 gekrümmt ist.

Zur Kopplung zwischen der Klinke 25 und der Steuerschwinge 7 steht an dem vom Gelenkbolzen 12 entfernt liegenden, oberen Ende der Steuerschwinge 7 parallel zum Gelenkbolzen 12 ein Zapfen 41 ab, welcher durch einen Durchbruch 43 in der Trägerschwinge 8 greift, und dessen anderes Ende in einem Langloch 45 der Klinke 25 geführt ist.

Im Crashfall wirkt aufgrund der Kraft auf die Lehne (Heckcrash) beziehungsweise auf das Gurtschloß und/oder den Gurtanbindungspunkt (Frontcrash) und des Sperrens des motorisch angetriebenen Viergelenks auf der anderen Fährzeugsitzseite über das Querrohr 13 ein Drehmoment, welches versucht, das Mehrgelenk 4 abzusenken (Heckcrash) beziehungsweise aufzurichten (Frontcrash). Dieses Drehmoment erzeugt ein Gegenmoment am Gelenkbolzen 12, welches versucht, die Steuerschwinge 7 relativ zur Trägerschwinge 8 zu verdrehen. Zunächst hält die Feder 18 noch den Riegel 15 im Gegenstück 17, wobei die obere Funktionsfläche 15' (Heckcrash) beziehungsweise die untere Funktionsfläche 15" (Frontcrash) versucht, aus dem Gegenstück 17 zu gelangen. Sobald die Grenzkraft überschritten wird, kommt der Riegel 18 frei, so daß die Verriegelungseinheit 10 öffnet und die starre Verbindung zwischen der Steuerschwinge 7 und der Trägerschwinge 8 aufgehoben ist. Das Mehrgelenk 4 ist nun ein echtes Fünfgelenk, welches eine geringe Geometrieänderung aufgrund der Schwenkbewegung zwischen Trägerschwinge 8 und Steuerschwinge 7 erfährt.

Diese Schwenkbewegung bewirkt über die Kopplung mit dem Zapfen 41, daß die Klinke 25 geschwenkt wird, was zu einem zwangsgesteuerten Zahneingriff der Klinke 25 in das Zahnsegment 23 führt, und zwar beim Heckcrash des unteren Verzahnungsbereichs 31 in den unteren Zahnsegmentbereich 35 und beim Frontcrash des oberen Verzahnungsbereichs 32 in den oberen Zahnsegmentbereich 36. Dadurch wird die Trägerschwinge 8 durch die Crashsperreneinheit 21 unter Überbrückung der Steuerschwinge 7 mit dem Gestell 5 verriegelt, d.h. das zu einem starren Dreigelenk werdende Mehrgelenk 4 wird gesperrt, und das ganze System wird steifer. Die Crashlasten können so direkt in die Fahrzeugstruktur geleitet werden und bewirken somit nur eine geringe Deformation in der Sitzstruktur. Aufgrund der geringen Geometrieänderung wird ein im Bereich der Koppel 9 vorgesehener Gurtanbindungspunkt oder Gurtschloßanbindungspunkt nur geringfügig vorverlagert.

### Bezugszeichenliste

- 1: Fahrzeugsitz
- 4: Mehrgelenk
- 5: Gestell
- 6: vordere Schwinge
- 7: Steuerschwinge
- 8: Trägerschwinge
- 9: Koppel
- 10: Verriegelungseinheit
- 11: Verbindungsbolzen
- 12: Gelenkbolzen
- 13: Querrohr
- 14: Riegel-Lagerbolzen
- 15: Riegel
- 15': obere Funktionsfläche
- 15": untere Funktionsfläche
- 17: Gegenstück
- 18: Feder
- 21: Crashsperreneinheit
- 23: Zahnsegment, Gegenelement
- 25: Klinke
- 27: Klinken-Lagerbolzen
- 31: unterer Verzahnungsbereich
- 32: oberer Verzahnungbereich
- 33: Schwerpunkt
- 35: unterer Zahnsegmentbereich
- 36: oberer Zahnsegmentbereich
- 39: Kulisse
- 41: Zapfen
- 43: Durchbruch
- 45: Langloch

## Patentansprüche

1. Fahrzeugsitz, insbesondere Kraftfahrzeugsitz, mit wenigstens einem Mehrgelenk (4) zur Einstellung der Sitzhöhe, welches durch wenigstens vier Getriebeglieder (5,6, 7, 8, 9) definiert ist und im Normalfall als Viergelenk wirksam ist, und einer Crashsperreneinheit (21), die im Crashfall wenigstens ein fahrzeugstrukturfestes Gestell (5) und eine Schwinge (8) als zwei der Getriebeglieder (5, 6, 7, 8) miteinander verriegelt, wobei zwischen dem Gestell (5) und der Schwinge (8) ein weiteres Getriebeglied (7) vorgesehen ist, **dadurch gekennzeichnet, dass** das Mehrgelenk (4) im Crashfall zunächst ein Fünfgelenk wird und durch das Verriegeln der Crashsperreneinheit (21) zum starren Dreigelenk wird.

2. Fahrzeugsitz nach Anspruch 1, **dadurch gekennzeichnet, dass** die Crashsperreneinheit (21) zwangsgesteuert aufgrund einer Geometrieänderung des Mehrgelenks (4) verriegelt.

3. Fahrzeugsitz nach Anspruch 2, **dadurch gekennzeichnet, dass** die Geometrieänderung des Mehrgelenks (4) reversibel erfolgt.

4. Fahrzeugsitz nach einem der Ansprüche 1 bis 3, **dadurch gekennzeichnet, dass** die Crashsperreneinheit (21) eine in zwei Richtungen wirksame Klinke (25), welche an einem der im Crashfall miteinander verriegelnden Getriebeglieder (8) schwenkbar gelagert ist, und ein Gegenelement (23) aufweist, welches fest an dem anderen Getriebeglied (5) angebracht ist.

5. Fahrzeugsitz nach Anspruch 4, **dadurch gekennzeichnet, dass** das zwischen dem Gestell (5) und der mit dem Gestell (5) im Crashfall verriegelnden Schwinge (8) vorgesehenen Getriebeglied (7) mit der Klinke (25) gekoppelt ist.

6. Fahrzeugsitz nach Anspruch 5, **dadurch gekennzeichnet, dass** die Kopplung über eine Schlitz-Zapfen-Führung (41, 45) erfolgt.

7. Fahrzeugsitz nach einem der Ansprüche 1 bis 6, **dadurch gekennzeichnet, dass** zwei benachbarte Getriebeglieder (5, 6, 7, 8, 9) des Mehrgelenks (4) im Normalfall durch eine Verriegelungseinheit (10) starr miteinander verbunden sind.

8. Fahrzeugsitz nach Anspruch 7, **dadurch gekennzeichnet, dass** die Verriegelungseinheit (10) kraftschlüssig hält und im Crashfall nach Überschreiten einer Grenzkraft öffnet, wodurch die beiden benachbarten Getriebeglieder (5, 6, 7, 8, 9) relativ zueinander beweglich sind.

9. Fahrzeugsitz nach Anspruch 8, **dadurch gekennzeichnet, dass** die Verriegelungseinheit (10) einen schwenkbar gelagerten Riegel (15) an einem Getriebeglied (8), ein Gegenstück (17) am anderen, benachbarten Getriebeglied (7) und eine Feder (18) zwischen dem Riegel (15) und dem ihm zugeordneten Getriebeglied (8) aufweist.

10. Fahrzeugsitz nach Anspruch 9, **dadurch gekennzeichnet, dass** der Riegel (15) und/oder das Gegenstück (17) zwei unterschiedliche Funktionsflächen (15', 15") aufweisen, welche für die beiden Crasharten unterschiedliche Parameter definieren.

## Claims

1. A vehicle seat, in particular a motor vehicle seat, having at least one multi-bar linkage (4) for setting the seat height, which multi-bar linkage is defined by at least four mechanism links (5, 6, 7, 8, 9) and, in the normal situation, is effective as a four-bar linkage, and a crash locking unit (21) which, in the event of a crash, locks a frame (5) fixed on the vehicle structure and a rocker (8) to each other as two of the mechanism links (5, 6, 7, 8), a further mechanism link (7) being provided between the frame (5) and the rocker (8), **characterized in that**, in the event of a crash, the multi-bar linkage (4) is first of all a five-bar linkage and, by the locking of the crash locking unit (21), becomes the rigid three-bar linkage.

2. The vehicle seat as claimed in claim 1, **characterized in that** the crash locking unit (21) locks in a positively controlled manner owing to a change in geometry of the multi-bar linkage (4).

3. The vehicle seat as claimed in claim 2, **characterized in that** the change in geometry of the multi-bar linkage (4) takes place reversibly.

4. The vehicle seat as claimed in one of claims 1 to 3, **characterized in that** the crash locking unit (21) has a latch (25), which is effective in two directions and is mounted pivotably on one of the mechanism links (8), which lock together in the event of a crash, and has a mating element (23) which is attached fixedly to the other mechanism link (5).

5. The vehicle seat as claimed in claim 4, **characterized in that** the mechanism link (7) which is provided between the frame (5) and the rocker (8), which locks to the frame (5) in the event of a crash, is coupled to the latch (25).

6. The vehicle seat as claimed in claim 5, **characterized in that** the coupling takes place via a slot and pin guide (41, 45).

7. The vehicle seat as claimed in one of claims 1 to 6, **characterized in that** two adjacent mechanism links (5, 6, 7, 8, 9) of the multi-bar linkage (4) are connected rigidly to one another in the normal situation by means of a locking unit (10).

8. The vehicle seat as claimed in claim 7, **characterized in that** the locking unit (10) retains in a frictional manner and, in the event of a crash, opens after a limit force is exceeded, as a result of which the two adjacent mechanism links (5, 6, 7, 8, 9) are moveable relative to each other.

9. The vehicle seat as claimed in claim 8, **characterized in that** the locking unit (10) has a pivotably mounted locking bar (15) on one mechanism link (8), a counterpart (17) on the other, adjacent mechanism link (7) and a spring (18) between the locking bar (15) and the mechanism link (8) assigned to it.

10. The vehicle seat as claimed in claim 9, **characterized in that** the locking bar (15) and/or the counterpart (17) has two different functional surfaces (15', 15") which define different parameters for the two types of crash.

## Revendications

1. Siège de véhicule, en particulier siège de véhicule automobile, comportant au moins un système à articulations multiples (4) pour le réglage de la hauteur de siège, lequel est défini par au moins quatre éléments de transmission (5, 6, 7, 8, 9) et agit dans le cas normal comme système à quatre articulations, et une unité (21) de blocage en cas d'accident, laquelle, en cas d'accident, verrouille ensemble au moins une armature (5) solidaire de la structure de véhicule et une bielle oscillante (8) en tant que deux des éléments de transmission (5, 6, 7, 8), un autre élément de transmission (7) étant prévu entre l'armature (5) et la bielle basculante (8), **caractérisé par le fait que** le système à articulations multiples (4) est, en cas d'accident, d'abord un système à cinq articulations, et que, par le verrouillage de l'unité (21) de blocage en cas d'accident, devient un système rigide à trois articulations.

2. Siège de véhicule selon la revendication 1, **caractérisé par le fait que** l'unité (21) de blocage en cas d'accident verrouille à commande forcée sur la base d'une modification de géométrie du système à articulations multiples (4).

3. Siège de véhicule selon la revendication 2, **caractérisé par le fait que** la modification de géométrie du système à articulations multiples (4) a lieu de façon réversible.

4. Siège de véhicule selon l'une des revendications 1 à 3, **caractérisé par le fait que** l'unité (21) de blocage en cas d'accident présente un cliquet (25) agissant dans deux directions, lequel est monté apte à pivoter sur l'un (8) des éléments de transmission se verrouillant ensemble en cas d'accident, et un contre-élément (23), lequel est fixé solidement sur l'autre élément de transmission (5).

5. Siège de véhicule selon la revendication 4, **caractérisé par le fait que** l'élément de transmission (7) prévu entre l'armature (5) et la bielle basculante (8) se verrouillant avec l'armature (5) en cas d'accident est couplé avec le cliquet (25).

6. Siège de véhicule selon la revendication 5, **caractérisé par le fait que** le couplage a lieu par l'intermédiaire d'un guide à fente et broche (41, 45).

7. Siège de véhicule selon l'une des revendications 1 à 6, **caractérisé par le fait que** deux éléments de transmission voisins (5, 6, 7, 8, 9) du système à articulations multiples (4) sont liés ensemble rigidement dans le cas normal par une unité de verrouillage (10).

8. Siège de véhicule selon la revendication 7, **caractérisé par le fait que** l'unité de verrouillage (10) tient par liaison de force et, en cas d'accident, s'ouvre après dépassement d'une force limite, ce par quoi les deux éléments de transmission voisins (5, 6, 7, 8, 9) sont déplaçables l'un par rapport à l'autre.

9. Siège de véhicule selon la revendication 8, **caractérisé par le fait que** l'unité de verrouillage (10) présente un verrou (15) monté apte à pivoter sur un élément de transmission (8), une contre-pièce (17), sur l'autre élément de transmission (7) voisin et un ressort (18) entre le verrou (15) et l'élément de transmission (8) associé à celui-ci.

10. Siège de véhicule selon la revendication 9, **caractérisé par le fait que** le verrou (15) et/ou la contre-pièce (17) présentent deux surfaces fonctionnelles différentes (15', 15"), lesquelles définissent des paramètres différents pour les deux sortes d'accident.
